(19) Europäisches Patentamt
European Patent Office
Office européen des brevets

(11) **EP 0 907 933 B1**

(12) **EUROPEAN PATENT SPECIFICATION**

(45) Date of publication and mention of the grant of the patent:
**11.04.2012  Bulletin 2012/15**

(21) Application number: **97927326.5**

(22) Date of filing: **25.06.1997**

(51) Int Cl.:
*G06T 15/50* *(2011.01)*

(86) International application number:
**PCT/IB1997/000836**

(87) International publication number:
**WO 1997/050060 (31.12.1997 Gazette 1997/57)**

(54) **SYSTEM AND METHOD FOR GENERATING PIXEL VALUES FOR PIXELS IN AN IMAGE USING STRICTLY DETERMINISTIC METHODOLOGIES FOR GENERATING SAMPLE POINTS**

SYSTEM UND VERFAHREN ZUR ERZEUGUNG VON PIXELWERTEN FÜR PIXEL IN EINEM BILD MIT GENAU DETERMINITISCHEN METHODOLOGIEN  ZUR MUSTERPUNKTENERZEUGUNG

SYSTEME ET PROCEDE DE GENERATION DE VALEURS DE PIXELS DANS UNE IMAGE SELON DES METHODOLOGIES STRICTEMENT DETERMINISTES DESTINEES A GENERER DES POINTS ECHANTILLONS

(84) Designated Contracting States:
**AT BE CH DE DK ES FI FR GB GR IE IT LI LU MC NL PT SE**

(30) Priority: **25.06.1996  US 22011 P**

(43) Date of publication of application:
**14.04.1999   Bulletin 1999/15**

(73) Proprietor: **NVIDIA Corporation**
**Santa Clara, CA 95050 (US)**

(72) Inventors:
• **GRABENSTEIN, Martin**
  **D-12047 Berlin (DE)**
• **HERKEN, Rolf**
  **D-14193 Berlin (DE)**

(74) Representative: **Greenwood, John David et al**
**Graham Watt & Co LLP**
**St Botolph's House**
**7-9 St Botolph's Road**
**Sevenoaks**
**Kent TN13 3AJ (GB)**

(56) References cited:
• **MOROKOFF AND CARFLISCH: "QUASI-MONTE CARLO INTEGRATION" JOURNAL OF COMPUTATIONAL PHYSICS, vol. 122, no. 2, December 1995, USA, pages 218-230, XP002041721**
• **VEACH E ET AL: "OPTIMALLY COMBINING SAMPLING TECHNIQUES FOR MONTE CARLO RENDERING" COMPUTER GRAPHICS PROCEEDINGS, LOS ANGELES, AUG. 6 - 11, 1995, 6 August 1995, COOK R, pages 419-428, XP000546254**
• **SHIRLEY P ET AL: "MONTE CARLO TECHNIQUES FOR DIRECT LIGHTING CALCULATIONS" ACM TRANSACTIONS ON GRAPHICS, vol. 15, no. 1, 1 January 1996, pages 1-36, XP000583750**
• **KELLLER A: "A Quasi-Monte-Carlo Algorithm for the Global Illumination Problem", , - 1994, pages 1-11, Dept. of Computer Science, University Kaiserslautern, Germany**

**Description**

The invention relates generally to the field of computer graphics, and more particularly to systems and methods for generating pixel values for pixels in the image.

In computer graphics, a computer is used to generate digital data that represents the projection of surfaces of objects in, for example, a three-dimensional scene, illuminated by one or more light sources, onto a two-dimensional image plane, to simulate the recording of the scene by, for example, a camera. The camera may include a lens for projecting the image of the scene onto the image plane, or it may comprise a pinhole camera in which case no lens is used. The two-dimensional image is in the form of an array of picture elements (which are variable termed "pixels" or "pels"), and the digital data generated for each pixel represents the colour and luminance of the scene as projected onto the image plane at the point of the respective pixel in the image plane. The surfaces of the objects may have any of a number of characteristics, including shape, colour, specularity, texture, and so forth, which are preferably rendered in the image as closely as possible, to provide a realistic-looking image.

Generally, the contributions of the light reflected from the various points in the scene to the pixel value representing the colour and intensity of a particular pixel are expressed in the form of the one or more integrals of relatively complicated functions. Since the integrals used in computer graphics generally will not have a closed-form solution, numerical methods must be used to evaluate them and thereby generate the pixel value. Typically, a conventional "Monte Carlo" method has been used in computer graphics to numerically evaluate the integrals. Generally, in the Monte Carlo method, to evaluate an integral

$$\langle f \rangle = \int_0^1 f(x)\, dx \quad (1),$$

where f(x) is a real function on the real numerical interval from zero to 1, inclusive, first a number "N" statistically-independent random numbers $x_i$, i=1, ..., N, are generated over the interval. The random numbers $x_i$ are used as sample points for which sample values $f(x_i)$ are generated for the function f(x), and an estimate $\bar{f}$ for the integral is generated as

$$\langle f \rangle \approx \bar{f} = \frac{1}{N} \sum_{i=1}^{N} f(x_i) \quad (2).$$

As the number of random numbers used in generating the sample points $f(x_i)$ increases, the value of the estimate $\bar{f}$ will converge toward the actual value of the integral <f>. Generally, the distribution of estimate values that will be generated for various values of "N," that is, for various numbers of samples, of being normal distributed around the actual value with a standard deviation σ which can be estimated by

$$\sigma = \sqrt{\frac{1}{N-1}\left(\overline{f^2} - \overline{f}^2\right)} \quad (3),$$

if the values $x_i$ used to generate the sample values $f(x_i)$ are statistically independent, that is, if the values $x_i$ are truly generated at random.

Generally, it has been believed that random methodologies like the Monte Carlo method are necessary to ensure that undesirable artifacts, such as Moiré patterns and aliasing and the like, which are not in the scene, will not be generated in the generated image. However, several problems arise from use of the Monte Carlo method in computer graphics. First, since the sample points $x_i$ used in the Monte Carlo method are randomly distributed, they may not be generally *evenly* distributed across the interval, but instead may clump in various regions over the interval over which the integral is to be evaluated. Accordingly, depending on the set of random numbers which are generated, in the Monte Carlo method for significant portions of the interval there may be no sample points $x_i$ for which sample values $f(x_i)$ are generated. In that case, the error can become quite large. In the context of generating a pixel value in computer graphics, the pixel value that is actually generated using the Monte Carlo method may not reflect some elements which might otherwise be reflected if the sample points $x_i$ were guaranteed to be generally evenly distributed over the interval. This problem can be alleviated somewhat by dividing the interval into a plurality of sub-intervals, but it is generally difficult to determine *a priori* the number of sub-intervals into which the interval should be divided, and, in addition, in a multi-dimensional integration region (which would actually be used in computer graphics, instead of the one-dimensional interval described here) the partitioning of the region into sub-regions of equal size can be quite complicated.

In addition, since the method makes use of random numbers, the error $|\bar{f} - <f>|$ (where $|x|$ represents the absolute value of the value "x") between the estimate value $\bar{f}$ and actual value $<f>$ is probabilistic, and, since the error values for various values of "N" are normal distributed around the actual value $<f>$, only sixty-eight percent of the estimate values $\bar{f}$ that might be generated are guaranteed to lie within one standard deviation of the actual value $<f>$.

Furthermore, as is clear from equation (3), the standard deviation σ decreases with increasing numbers of samples N, proportional to the reciprocal of square root of "N" (that is, $1 / \sqrt{N}$). Thus, if it is desired to reduce the statistical error by a factor of two, it will be necessary to increase the number of samples N by a factor of four, which, in turn, increases the computational load that is required to generate the pixel values, for each of the numerous pixels in the image.

Additionally, since the Monte Carlo method requires random numbers, an efficient mechanism for generating random numbers is needed. Generally, digital computers are provided with so-called "random number" generators, which are computer programs which can be processed to generate a set of numbers that are approximately random. Since the random number generators use deterministic techniques, the numbers that are generated are not truly random. However, the property that subsequent random numbers from a random number generator are statistically independent should be maintained by deterministic implementations of pseudo-random numbers on a computer.

Morokoff and Carflisch: "Quasi-Monte Carlo Integration" journal of computational physics, vol. 122, no. 2, December 1995, USA, compares quasi-random (Halton, Sobol, and Faure) and pseudo-random sequences in computational experiments designed to determine the effects on convergence of certain properties of the integrand, including variance, variation, smoothness, and dimension. The results are said to show that variation, which plays in important role in the theoretical upper bound given by the Koksma-Hlawka inequality, does not affect convergence, while variance, the determining factor in random Monte Carlo, is shown to provide a rough upper bound, but does not accurately predict performance. In general, it is said, quasi-Monte Carlo methods are superior to random Monte Carlo, but the advantage may be slight, particularly in high dimensions or for integrands that are not smooth. For discontinuous integrands, the authors derive a bound which shows that the exponent for algebraic decay of the integration error from quasi-Monte Carlo is only slightly larger than 1/2 inch high dimensions.

Veach E et al: "Optimally combining Sampling Techniques for Monte Carlo Rendering" computer graphics proceedings, Los Angeles, Aug. 6-11, 1995, describes a method of constructing robust Monte Carlo estimators, by combining samples from several distributions in a way that is provably good. These estimators are unbiased and can reduce variance significantly at little additional cost. The authors present experiments and measurements from several areas in rendering: calculation of glossy highlights from area light sources, the "final gather" pass of some radiosity algorithms, and direct solution of the rendering equation using bidirectional path tracing.

Shirley P et al: "Monte Carlo Techniques for Direct Lighting Calculations" ACM transactions on graphics, vol. 15, no. 1, 1 January 1996, discloses a computer graphics system having the features of the preambles of the independent claims. The present invention is characterized by the features of the characterizing portions or those claims with optional features recited in dependent claims.

The paper by Keller A: "A Quasi-Monte-Carlo Algorithm for the Global Illumination Problem"; 1994, pages 1-11, Dept. of Computer Science, University Kaiserslautern, Germany describes a computer graphics system and method having the features of the preamble of claims 1 and 14, respectively. The present invention is characterized by the characterizing features of these claims.

In brief summary, the computer graphics system in accordance with the invention generates pixel values for a predetermined number of contiguous pixels in an image of objects in a scene, using strictly-deterministic low-discrepancy sequences, illustratively Halton sequences, as sample points for the quasi-Monte Carlo evaluation of integrals which are used to simulate a number of computer graphic techniques, including

    (1) soft shadows generated for scenes illuminated by a light source having a finite extent, such as a disk, as opposed to a point light source;
    (2) Simulation of depth of field;
    (3) motion blur; and
    (4) jittering.

The computer graphics system uses the low-discrepancy sequences:

(1) in connection with soft shadows, to generate sample points over the finite area of the light source illuminating the scene;

(2) in connection with simulation of depth of field, to generate sample points over the area of the lens between the scene and the image;

(3) in connection with motion blur, to generate sample points over a time interval over which motion blur is to be simulated for moving objects in the scene; and

(4) in connection with jittering, to generate jittered sample points over an image or a plurality of contiguous pixels.

Unlike the random numbers used in connection with the Monte Carlo technique, the low discrepancy sequences ensure that the sample points are evenly distributed over a respective region or time interval, thereby reducing error in the image which can result from clumping of such sample points which can occur in the Monte Carlo technique.

In particular, the invention facilitates the generation of images of improved quality when using the same number of sample points at the same computational cost as in the Monte Carlo technique.

Advantageous features of the present invention are recited in the appended claims. The above and further advantages of this invention may be better understood by referring to the following description taken in conjunction with the accompanying drawings, in which:

FIG. 1 depicts a computer graphics system constructed in accordance with the invention; and

FIGS. 2 through 5 are flow-charts useful in understanding the operations of the computer graphics system depicted in FIG. 1, in accordance with the invention.

The invention provides a computer graphic system and method for generating pixel values for pixels in an image of a scene, which makes use of a strictly-deterministic methodology for generating sample points for use in generating sample values for evaluating the integral or integrals whose function(s) represent the contributions of the light reflected from the various points in the scene to the respective pixel value, rather than the random or pseudo-random Monte Carlo methodology which has been used in the past. The strictly-deterministic methodology ensures *a priori* that the sample points will be generally evenly distributed over the interval or region over which the integral(s) is (are) to be evaluated in a low-discrepancy manner.

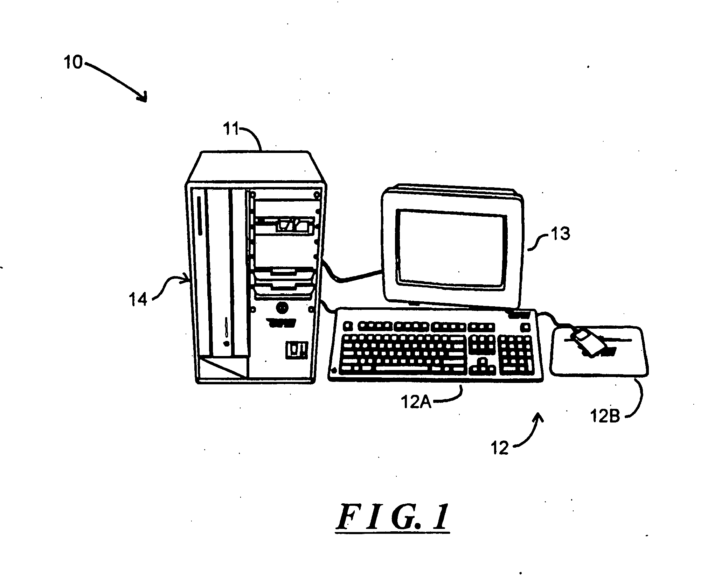

FIG. 1 attached hereto depicts an illustrative computer system 10 that makes use of such a strictly deterministic methodology. With reference to FIG. 1, the computer system 10 in one embodiment includes a processor module 11 and operator interface elements comprising operator input components such as a keyboard 12A and/or a mouse 12B (generally identified as operator input element(s) 12) and an operator output element such as a video display device 13. The illustrative computer system 10 is of the conventional stored-program computer architecture. The processor module 11 includes, for example, one or more processors, memories and mass storage devices such as disk and/or tape storage elements (not separately shown) which perform processing and storage operations in connection with digital data provided thereto. The operator input element(s) 12 are provided to permit an operator to input information for processing. The video display device 13 is provided to display output information generated by the processor module 11 on a screen 14 to the operator, including data that the operator may input for processing, information that the operator may input to control processing, as well as information generated during processing. The processor module 11 generates information for display by the video display device 13 using a so-called "graphical user interface" ("GUI"), in which information for various applications programs is displayed using various "windows." Although the computer system 10 is shown as comprising particular components, such as the keyboard 12A and mouse 12B for receiving input information from an operator, and a video display device 13 for displaying output information to the operator, it will be appreciated that the computer system 10 may include a variety of components in addition to or instead of those depicted in FIG. 1.

In addition, the processor module 11 includes one or more network ports, generally identified by reference numeral 14, which are connected to communication links which connect the computer system 10 in a computer network. The network ports enable the computer system 10 to transmit information to, and receive information from, other computer systems and other devices in the network. In a typical network organized according to, for example, the client-server paradigm, certain computer systems in the network are designated as servers, which store data and programs (generally, "information") for processing by the other, client computer systems, thereby to enable the client computer systems to conveniently share the information. A client computer system which needs access to information maintained by a particular server will enable the server to download the information to it over the network. After processing the data, the client computer system may also return the processed data to the server for storage. In addition to computer systems (including the above-described servers and clients), a network may also include, for example, printers and facsimile devices, digital audio or video storage and distribution devices, and the like, which may be shared among the various computer systems connected in the network. The communication links interconnecting the computer systems in the network may, as is conventional, comprise any convenient information-carrying medium, including wires, optical fibres or other media for carrying signals among the computer systems. Computer systems transfer information over the network by means of messages transferred over the communication links, with each message including information and an identifier identifying the device to receive the message.

As noted above, the computer graphics system 10 generates pixel values for pixels in an image of a scene, which makes use of a strictly-deterministic methodology for selecting sample points used to generate sample values which are then used in evaluating the integral or integrals whose function(s) represent the contributions of the light reflected from the various points in the scene to the respective pixel value. In one particular embodiment, the strictly-deterministic methodology used by the computer graphics system 10 provides a low-discrepancy sample point sequence which ensures, a priori, that the sample points are generally evenly distributed throughout the region over which the respective integrals are being evaluated. In one embodiment, the sample points that are used are based on a so-called Halton sequence. See, for example, J. H. Halton, Numerische Mathematik, Vol. 2, pp. 84-90 (1960) and W. H. Press, et al., Numerical Recipes in Fortran (2d Edition) page 300 (Cambridge University Press, 1992). In a Halton sequence generated for number base "p," where base "p" is a selected prime number, the "k-th" value of the sequence, represented by $H_p{}^k$ is generated by

(1) writing the value "k" as a numerical representation of the value in the selected base "p," thereby to provide a representation for the value as $D_M D_{M-1} \cdots D_2 D_1$ , where $D_m$ (m=1, 2, ..., M) are the digits of the representation, and (2) putting a radix point (corresponding to a decimal point for numbers written in base ten) at the end of the representation $D_M D_{M-1} \cdots D_2 D_1$ written in step (1) above, and reflecting the digits around the radix point to provide $0.D_1 D_2 \cdots D_{M-1} D_M$, which corresponds to $H_p{}^k$.

It will be appreciated that, regardless of the base "p" selected for the representation, for any series of values, one, two, ... "k," written in base "p," the least significant digits of the representation will change at a faster rate than the most significant digits. As a result, in the Halton sequence $H_p{}^1$, $H_p{}^2$, $\cdots H_p{}^k$, the most significant digits will change at the faster rate, so that the early values in the sequence will be generally widely distributed over the interval from zero to one, and later values in the sequence will fill in interstices among the earlier values in the sequence. Unlike the random or pseudo-random numbers used in the Monte Carlo method as described above, the values of the Halton sequence are not statistically independent; on the contrary, the values of the Halton sequence are strictly deterministic, "maximally avoiding" each other over the interval, and so they will not clump, whereas the random or pseudo-random numbers used in the Monte Carlo method may clump.

It will be appreciated that the Halton sequence as described above provides a sequence of values over the interval from zero to one, inclusive along a single dimension. A multi-dimensional Halton sequence can be generated in a similar manner, but using a different base for each dimension.

A generalized Halton sequence, of which the Halton sequence described above is a special case, is generated as follows. For each starting point along the numerical interval from zero to one, inclusive, a different Halton sequence is generated. Defining the pseudo-sum $x \oplus_p y$ for any x and y over the interval from zero to one, inclusive, for any integer "p" having a value greater than two, the pseudo-sum is formed by adding the digits representing "x" and "y" in reverse order, from the most-significant digit to the least-significant digit, and for each addition also adding in the carry generated from the sum of next more significant digits. Thus, if "x" in base "p" is represented by $0.X_1 X_2 \cdots X_{M-1} X_M$, where each "$X_m$" is a digit in base "p," and if "y" in base "p" is represented by $0.Y_1 Y_2 \cdots Y_{N-1} Y_N$, where each "$Y_n$" is a digit in base "p" (and where "M," the number of digits in the representation of "x" in base "p", and "N," the number of digits in the representation of "y" in base "p", may differ), then the pseudo-sum "z" is represented by $0.Z_1 Z_2 \cdots Z_{L-1} Z_L$, where each "$Z_1$" is a digit in base "p" given by $Z_1 = (X_1 + Y_1 + C_1) \bmod p$, where "mod" represents the modulo function, and

$$C_l = \begin{cases} 1 \ for \ X_{l-1} + Y_{l-1} + C_{l-1} \geq p \\ 0 \ otherwise \end{cases}$$

and $C_1$ is set to zero.

Using the pseudo-sum function as described above, the generalized Halton sequence is generated as follows. If "p" is an integer, and $x_0$ is an arbitrary value on the interval from zero to one, inclusive, then the "p"-adic von Neumann-Kakutani transformation $T_p(x)$ is given by

$$T_p(x) := x \oplus_p \frac{1}{p} \quad (4),$$

and the generalized Halton sequence $x_0, x_1, x_2, ...$ is defined recursively as

$$x_{n+1} = T_p(x_n) \quad (5).$$

From equations (4) and (5), it is clear that, for any value for "p," the generalized Halton sequence can provide a different sequence will be generated for each starting value of "x," that is, for each $x_0$. It will be appreciated that the Halton sequence $H_p^k$ as described above is a special case of the generalized Halton sequence (equations (4) and (5)) for $x_0=0$.

The use of the low-discrepancy sequence in evaluating integrals to generate pixel values for pixels in an image in computer graphics will be illustrated in connection several specific computer applications, in particular, the generation of pixel values for images representing

  (1) soft shadows generated for scenes illuminated by a light source having a finite extent, such as a disk, as opposed to a point light source;
  (2) Simulation of depth of field;
  (3) motion blur; and
  (4) jittering.

Operations performed by the computer graphics system 10 in connection with each of these will be described below.

(1) Soft Shadows

Soft shadows can occur in a scene when objects in the scene are illuminated by a light source having an identifiable area, such as a disk, instead of a point light source. Illustratively, when a solar eclipse occurs, the penumbra portion of the shadow cast by the moon on the earth is a soft shadow, and the umbra portion constitutes a full shadow. The umbra portion of the eclipse occurs in regions of the earth for which the moon completely obscures the sun, and the penumbra portion occurs in regions for which the moon partially obscures the sun. The degree of shadow in the penumbra lessens as one proceeds outwardly from the umbra, and the penumbra constitutes the "soft shadow" for the eclipse. For a particular shadow in a scene, the soft shadow represents a grading from the region (if any) of the scene that is in full shadow to the region for which there is no shadow.

In a scene, a portion of a pixel value for a point in a scene representing illumination by a light source having an area is generated by averaging the illumination of a particular point in a scene by a light source over the area of the light source. If the point in the scene is in a full shadow region, which may occur if the point is completely obscured by one or more objects in the scene, then the average will represent a luminance level representative of full shadow. Similarly, if the point is in a no-shadow region, then the average will represent a luminance level representative of no shadow. On the other hand, if the point is partially obscured from the full area of the light source by objects in the scene, and thus is in a soft shadow region, then the average will represent an intermediate luminance level based on the amount of the light source that is obscured. In any case, the average is given illustratively by the two-dimensional integral

$$I(\vec{x}) = \int_{A'} \frac{V(\vec{x}, \vec{x}')}{|\vec{x} - \vec{x}'|^2} L_e(\vec{x}') \, dA' \quad (6),$$

where $(\vec{x})$ is a point in the scene for which the illumination value is being generated, $(\vec{x}')$ is a point on the area light source, $I(\vec{x})$ represents the illumination at the point $(\vec{x})$ in the scene, $L_e(\vec{x})$ denotes the level of light emission of the area light source, and $V(\vec{x},\vec{x}')$ is a visibility function that equals one if the point $(\vec{x}')$ on the light source is visible from the point $(\vec{x})$ in the scene and zero if the if the point $(\vec{x}')$ on the light source is not visible from the point $(\vec{x})$ in the scene. The integral is evaluated over the area A' of the light source. The formulation of the function $\dfrac{V(\vec{x}, \vec{x}')}{|\vec{x} - \vec{x}'|^2} L_e(\vec{x}')$ for a

particular image is known to one of skill in the art.

In accordance with the invention, the computer graphics system 10 evaluates the integral (equation (6)) to generate a pixel value by selecting a number "N" of sample points $(\vec{x_i'})$ using a two-dimensional generalized Halton sequence. After the sample points $(\vec{x_i'})$ are generated, the computer graphics system 10 evaluates the function

$$\frac{V(\vec{x}, \vec{x'})}{|\vec{x} - \vec{x'}|^2} L_e(\vec{x_i'}) \quad (7)$$

for each of the generated sample points and approximates the value of the integral (equation (6)) as

$$I(\vec{x}) \approx \overline{I(\vec{x})} = \frac{1}{N} \sum_{i=1}^{N} \frac{V(\vec{x}, \vec{x_i'})}{|\vec{x} - \vec{x_i'}|^2} L_e(\vec{x_i'}) \quad (8)$$

for each of the points $(\vec{x})$ in the scene for which the illumination value $I(\vec{x})$ is to be generated. The use of a low-discrepancy sequence, illustratively the Halton sequence, will ensure that the sample points will not clump, but instead will be evenly distributed over the area of the light source.

In one embodiment, for each of the points $(\vec{x})$ in the scene for which the illumination value $I(\vec{x})$ is to be generated, the computer graphics system 10 uses a different Halton sequence, generated in accordance with the generalized Halton sequence methodology described above (equation (5)), so as to avoid generating pixel values for which the soft shadows might otherwise appear blocky. In that embodiment, the particular Halton sequence is generated using a base value $x_0$ which is based on the coordinates of the point in the image for which the pixel value is being generated that is associated with the point $(\vec{x})$ in the scene.

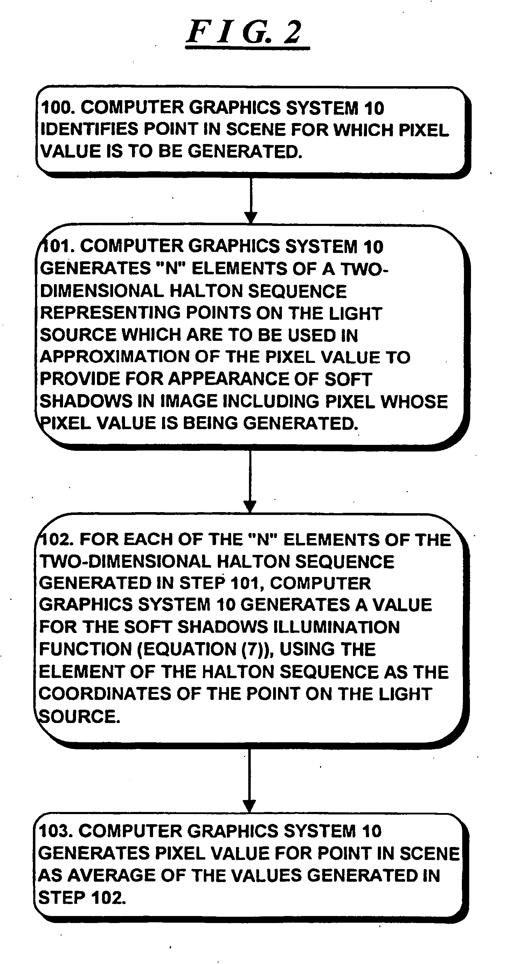

Operations described above in connection with the generation of pixel values so as to provide soft shadows are depicted on the flow-chart in FIG. 2. Since the operations as depicted in that flow-chart will be readily apparent to those skilled in the art from the above description, the flow-chart in that FIG. will not be separately described in this specification.

It will be appreciated that the function $\dfrac{V(\vec{x}, \vec{x'})}{|\vec{x} - \vec{x'}|^2} L_e(\vec{x'})$ used in equation (6) is illustrative of the functions that can be used in connection with generation of pixel values to simulate soft shadows, and other functions will be apparent to those skilled in the art, with corresponding changes in equations (7) and (8). For example, although in the denominator of $\dfrac{V(\vec{x}, \vec{x'})}{|\vec{x} - \vec{x'}|^2}$ in equation (6), the term "$|\vec{x}-\vec{x'}|$" is indicated as being taken to the second power (that is, squared), it will be appreciated that other powers can be used, in which case equations (7) and (8) would be modified accordingly, In addition, although the Halton sequence has been indicated as being used to provide the sample points for the evaluation, it will be appreciated that other low-discrepancy sequences, which are known in the art, could be used instead.

In addition, it will be appreciated that, although the computer graphics system 10 has been described as simulating soft shadows in connection with area light sources, the computer graphics system 10 can also simulate soft shadows in connection with a linear light source in a manner similar to that described above. As with simulation of soft shadows for an area light source, the computer graphics system 10 will constrain the sample points $(\vec{x_i'})$ to fall on the light source. In addition, if the light source is a linear light source, the computer graphics system 10 can generate the sample points $(\vec{x_i'})$ using a one-dimensional generalized Halton sequence.

(2) Depth of Field Simulation

As noted above, the computer graphics system 10 can generate pixel values defining a rendered image representing an image which would be recorded for a pinhole camera, or alternatively it can generate pixel values defining a rendered image representing an image which would be recorded for a camera with a lens. Typically, for a camera without a lens, all of the objects are normally in focus. However, for a conventional camera with a lens, the objects at a particular distance from the lens, as well as objects within a plane of predetermined distance thereof, known as the "depth of field" would be in focus. For objects which are closer or more distant, the objects would be increasingly blurred.

To simulate generation of an image for a camera with a depth of field, the computer graphics system 10 generates a pixel value for each pixel based on the evaluation of the integral

$$L(x,y) = \int_{A_{eff}} \overline{L}(x,y,x',y')\, dx'dy' \quad (9),$$

where $\overline{L}(x, y, x', y')$ denotes the luminance coming from the point $(x',y')$ on the lens in the direction of the point $(x,y)$ in the image plane. The computer graphics system 10 evaluates the integral over the area $A_{eff}$ of the lens. The formulation of the function $\overline{L}(x,y,x',y')$ for a particular image is known to one of skill in the art.

In accordance with the invention, the computer graphics system 10 evaluates the integral (equation (9)) to generate a pixel value by selecting a number "N" of sample points for points $(x_i, y_i)$ on the lens using the Halton sequence to provide the sample points. After the sample points are generated, the computer graphics system 10 evaluates the function $\overline{L}(x,y,x',y')$ for each of the "N" sample points $(x_i, y_i)$ and approximates the integral (equation (9)) as

$$L(x,y) = \frac{1}{N} \sum_{i=1}^{N} \overline{L}(x,y,x_i,y_i) \quad (10),$$

In one particular embodiment, for each point $(x_i, y_i)$ on the image plane, the computer graphics system 10 uses a different Halton sequence, generated in accordance with the generalized Halton sequence methodology described above (equation (5)), so as to avoid generating pixel values for which the rendered image might otherwise appear blocky. In that embodiment, the particular Halton sequence is generated using a base value $x_0$ which is based on the coordinates of the point in the image for which the pixel value is being generated that is associated with the point $(x_i, y_i)$ in the image plane. The use of a low-discrepancy sequence, illustratively the Halton sequence, will ensure that the sample points will not clump, but instead will be evenly distributed over the area of the lens.

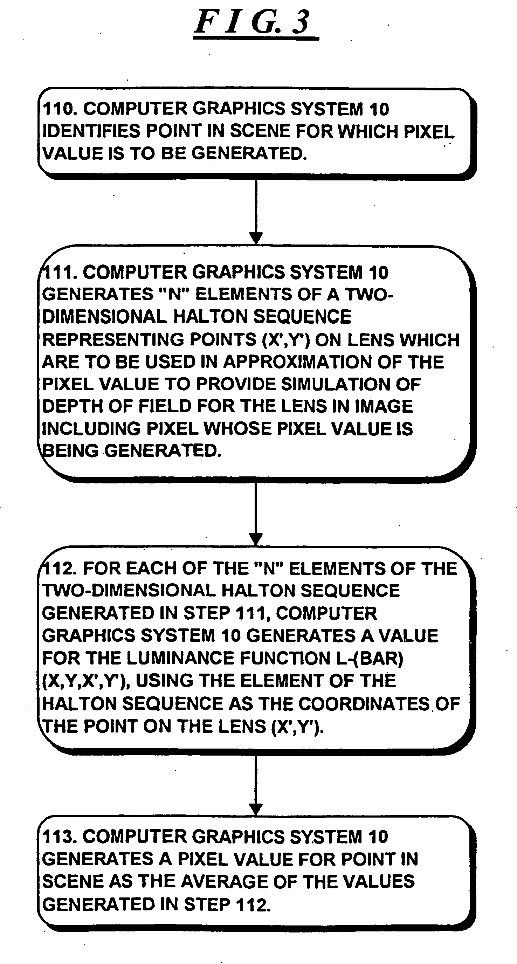

Operations described above in connection with the generation of pixel values so as to provide depth of field are depicted on the flow-chart in FIG. 3. Since the operations as depicted in that flow-chart will be readily apparent to those skilled in the art from the above description, the flow-chart in that FIG. will not be separately described in this specification.

The use of sample points $(x_i)$ selected as described above for the evaluation of the integral (equation (9)) is advantageous in that the use of the low-discrepancy set of sample points has a "self-avoiding" property that ensures that the sample points will not be clumped together, which clumping is possible with prior methodologies such as the random-number-based Monte Carlo method. A further advantage is that the number of sample points $(x_i)$ does not need to be selected *a priori* prior to the computation.

It will be appreciated that the function $\overline{L}(x,y,x,y')$ used in equation (9) is illustrative of the functions that can be used in connection with generation of pixel values to simulate depth of field, and other functions will be apparent to those skilled in the art, with corresponding changes in equation (10). In addition, although the Halton sequence has been indicated as being used to provide the sample points for the evaluation, it will be appreciated that other low-discrepancy sequences, which are known in the art, could be used instead.

(3) Motion Blur

Motion blur occurs when, for example, an object in a scene being recorded by a stationary camera is moving. The motion blur occurs because the camera's shutter has a non-zero time interval over which it is open, and, if the camera is not moved to so as to maintain the moving object at precisely the same point in the image, the point at which the moving object appears in the image moves over the time interval. Accordingly, edges of the object which are transverse to the direction of motion appears to be blurred over the image.

To simulate generation of an image of a scene in which an object is moving, by a camera whose shutter has a non-zero time interval over which it is open, the computer graphics system 10 generates a pixel value for each pixel based on the evaluation of the integral

$$L(x,y) = \frac{1}{t_s} \int_0^{t_s} L(x,y,t)\, dt \quad (11)$$

where $L(x,y)$ is the luminance of point $(x,y)$, $L(x,y,t)$ is the luminance of point $(x,y)$ in the image at time "t," and "$t_s$" is the time period over which the shutter is open. It will be appreciated that $L(x,y)$ is essentially the average of $L(x,y,t)$ over time $t_s$. The formulation of the function $L(x,y,t)$ for a particular image is known to one of skill in the art.

In accordance with the invention, the computer graphics system 10 evaluates the integral (equation (11)) to generate a pixel value by selecting a number "N" of sample points for points $(t_i)$ over the time interval from zero to $t_s$ using the Halton sequence to provide the sample points. After the sample points are generated, the computer graphics system 10 evaluates the function $L(x,y,t)$ for each of the "N" sample points $(t_i)$ and approximates the integral (equation (11)) as

$$L(x,y) \approx \overline{L(x,y,)} = \frac{1}{N} \sum_{i=1}^{N} L(x,y,t_i) \quad (12)$$

In one particular embodiment, for each pixel in the image, the computer graphics system 10 uses a different generalized Halton sequence, generated in accordance with the generalized Halton sequence methodology described above (equation (5)), so as to avoid generating pixel values for which the rendered image might otherwise appear blocky. In that embodiment, the particular Halton sequence is generated using a base value $x_0$ which is based on the coordinates of the point $(x,y)$ in the image for which the pixel value is being generated. The use of a low-discrepancy sequence, illustratively the Halton sequence, will ensure that the sample points will not clump, but instead will be evenly distributed over the time period over which the integral (equation (11) is to be evaluated).

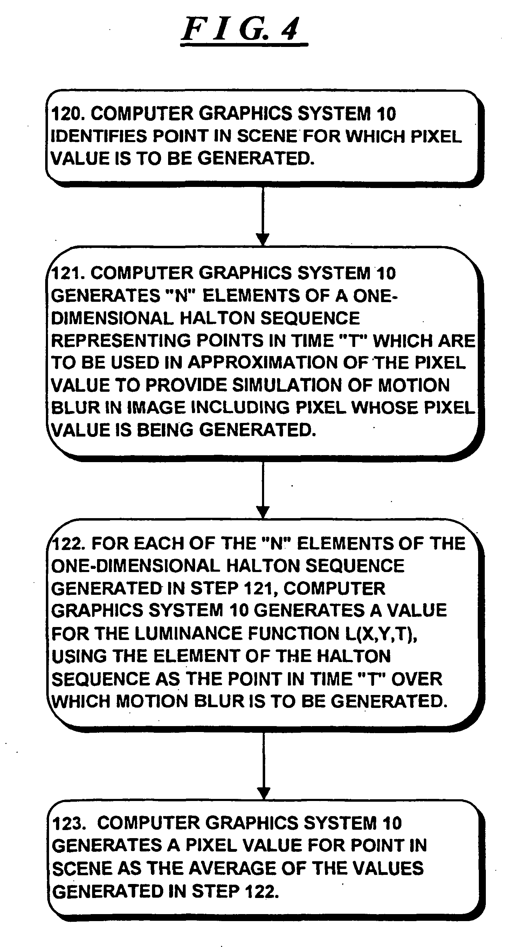

Operations described above in connection with the generation of pixel values so as to provide motion blur are depicted on the flow-chart in FIG. 4. Since the operations as depicted in that flow-chart will be readily apparent to those skilled in the art from the above description, the flow-chart in that FIG. will not be separately described in this specification.

It will be appreciated that the function $L(x,y,t)$ used in equation (11) is illustrative of the functions that can be used in connection with generation of pixel values to simulate depth of field, and other functions will be apparent to those skilled in the art, with corresponding changes in equation (12). In addition, although the Halton sequence has been indicated as being used to provide the sample points for the evaluation, it will be appreciated that other low-discrepancy sequences, which are known in the art, could be used instead.

In addition, it will be appreciated that the computer graphics system 10 may use a one-dimensional Halton sequence to generate sample points $(t_i)$ for use in equation (12) along a temporal dimension "t" for each sample point $(x,y)$ in the image. In that case, during generation of the pixel value, the computer graphics system 10 will generate the luminance value $L(x,y)$ for the sample point $(x,y)$ in accordance with equation (12). Alternatively, the computer graphics system 10 may use, for example, a three-dimensional Halton sequence to generate sample points $(x_i,y_i,t_i)$ along both the temporal dimension "t" and spatial dimensions "x" and "y" of the image plane, for use in equation (12), and can generate the luminance value for the pixel using equation (12) using the luminance values $L(x_i,y_i,t_i)$, where $(x_i,y_i)$ are sample points within the region of the pixel.

(4) Jittering

To generate a pixel value for a pixel which represents the colour of the pixel at the respective point in the image, the colour represented by the pixel value is averaged over the area of the pixel. To simulate that, the computer graphics system 10 generates the pixel value for pixel $P_i$ to have an averaged colour $L_i$ by evaluating the integral

$$L_i = \frac{1}{|P_i|} \int_{P_i} L(x,y)\, dx\, dy \quad (13),$$

where $L(x,y)$ represents the colour at point $(x,y)$ in the image, and $|P_i|$ represents the area of the pixel $P_i$. The formulation of the function $L(x,y)$ for a particular image is known to one of skill in the art.

The computer graphics system 10 can evaluate the integral (equation (13)) to generate a pixel value by selecting a number "N" of sample points $(x_i, y_i)$ in the pixel $P_i$ using the Halton sequence to provide the sample points. After the sample points are generated, the computer graphics system 10 evaluates the function $L(x,y)$ for each of the "N" sample points $(x_i, y_i)$ and approximates the integral (equation (13)) as

$$L(x,y) \approx \overline{L(x,y,)} = \frac{1}{N} \sum_{i=1}^{N} L(x_i, y_i) \quad (14)$$

Several problems arise, however, if the integral (equation (13)) is evaluated using a Halton sequence generated for each pixel. First, although the Halton sequence guarantees that no clumping occurs within a single pixel, it will not guarantee that clumping will not occur at boundaries of adjacent pixels. In addition, the Halton sequences generated for the pixels would exhibit periodicity on the pixel level, in which case artifacts may be generated in the image which can be evident to the eye.

Thus, to accommodate these problems, in accordance with the invention, the computer graphics system 10 generates the Halton sequence to generate the sample points either for the image as a whole or for a predetermined number of contiguous pixels in the following manner. Initially, the computer graphics system 10 divides the image or the predetermined number of contiguous pixels based on a grid of size "n" by "m," where $n=2^i$ is a positive power ("i") of two and $m=3^j$ is a positive power ("j") of three. (In this description, two and three are the number bases (that is, "p" in equations 4 and 5 describing the one-dimensional Halton sequence) selected for generation of the two-dimensional Halton sequence; if the computer graphics system 10 uses other number bases for generation of the two-dimensional Halton sequence, then "n" and "m" would be selected to be powers of those number bases.) Then the computer graphics system 10 generates the set of sample points $(x_i, y_i)$ to be used in evaluating equation (14) as $(nH_2^k, MH_3^k)$ for $k=1, \ldots,$ nm, which constitutes a scaled two-dimensional Halton sequence, with the scaling being in accordance with the values of "n" and "m". The sample points so generated, precisely one sample point will be provided in each of a plurality of sub-pixels in each pixel, if the left and lower boundaries of each sub-pixel are deemed to form part of the sub-pixel and the right and upper boundaries of each sub-pixel are deemed not to form part of the sub-pixel.

For example, if the computer graphics system 10 is to generate sample points on "N" by "N" sub-pixels for each pixel, and if the number of columns in the image or the selected sub-set of contiguous pixels is $Res_x$, and if the number of rows of pixels in the image or the selected sub-set of contiguous pixels is $Res_y$, then the computer graphics system 10 can generate a number of $N \cdot Res_x \times N \cdot Res_y$, of sample points to be used with the pixels in the image or selected subset of pixels by initially selecting integers "i" and "j" such that $n=2^i \geq N \cdot Res_x$ and $m=3^j \geq N \cdot Res_y$. Note that the sub-pixel grid of "n" by "m" sub-pixels will in general be larger than the size of the image or selected subset of contiguous pixels.

According to the mechanism described above, the computer graphics system 10 can evaluate the integral in equation (14) for each pixel using the sample points which are provided within the area of the respective pixel.

Several benefits arise from generating sample points using the scaled two-dimensional Halton sequence ($nH_2^k$, $mH_3^k$) for the entire image or selected sub-set of contiguous pixels in evaluating the integral in equation (14), instead of using the unscaled Halton sequence (that is, illustratively, $(H_2^k, H_3^k)$) within one pixel as the sample points. First, by using a scaled two-dimensional Halton sequence, periodicity of the sample points on the level of a pixel, which can occur in connection with the unscaled two-dimensional Halton sequence, will be avoided. In addition, the use of a scaled two-dimensional Halton sequence ($nH_2^k$, $mH_3^k$) will ensure that no clumping of sample points will occur at the boundaries of adjacent pixels, which can occur in connection with the unscaled two-dimensional Halton sequence. Therefore, the use of a scaled two-dimensional Halton sequence ($nH_2^k$, $mH_3^k$) will ensure that the sample points will be evenly distributed throughout the entire image or contiguous region of pixels. This will also be the case if relatively few sample points are used, and even if only one sample point per pixel is used.

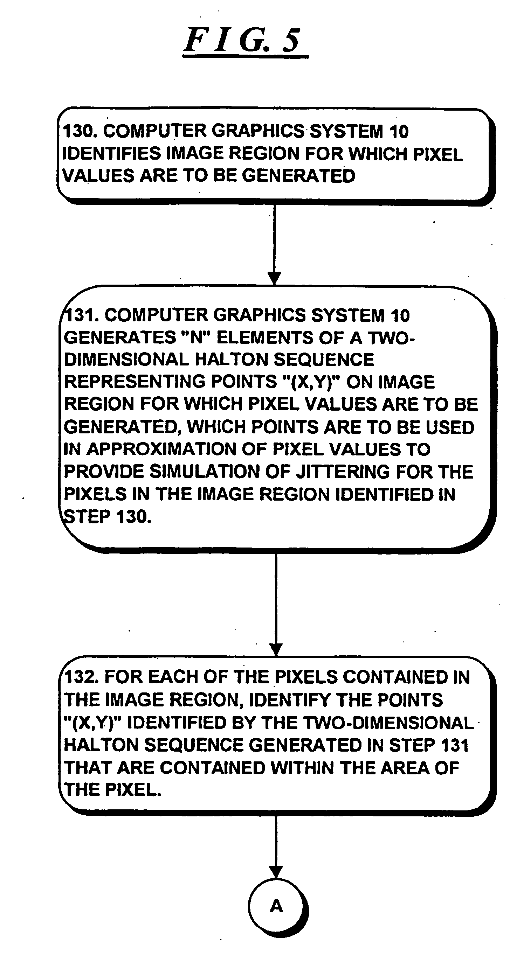

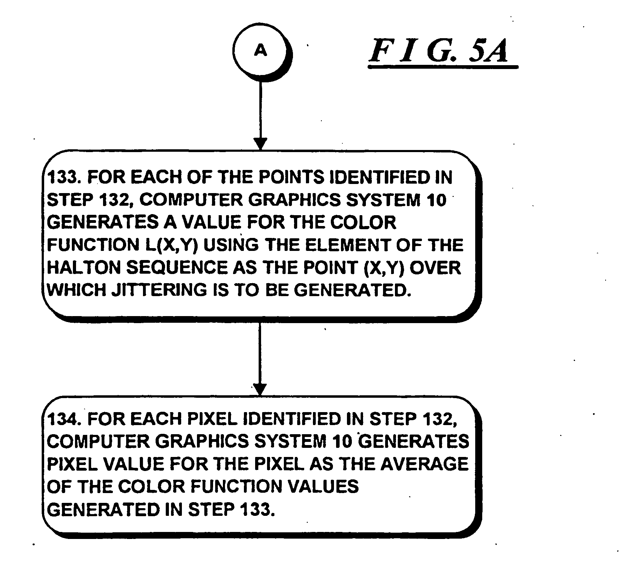

Operations described above in connection with the generation of pixel values so as to provide jittering are depicted on the flow-chart in FIG. 5. Since the operations as depicted in that flow-chart will be readily apparent to those skilled in the art from the above description, the flow-chart in that FIG. will not be separately described in this specification.

It will be appreciated that the function L(x,y) used in equation (13) is illustrative of the functions that can be used in connection with generation of pixel values to simulate jittering, and other functions will be apparent to those skilled in the art, with corresponding changes in equation (14). In addition, although the Halton sequence has been indicated as being used to provide the sample points for the evaluation, it will be appreciated that other low-discrepancy sequences, which are known in the art, could be used instead.

It will be appreciated that a system in accordance with the invention can be constructed in whole or in part from special purpose hardware or a general purpose computer system, or any combination thereof, any portion of which may be controlled by a suitable program. Any program may in whole or in part comprise part of or be stored on the system in a conventional manner, or it may in whole or in part be provided in to the system over a network or other mechanism for transferring information in a conventional manner. In addition, it will be appreciated that the system may be operated and/or otherwise controlled by means of information provided by an operator using operator input elements (not shown) which may be connected directly to the system or which may transfer the information to the system over a network or other mechanism for transferring information in a conventional manner.

Generally the invention provides a computer graphics system generates pixel values for pixels in an image of objects in a scene, using strictly-deterministic low-discrepancy sequences, illustratively Halton sequences, as sample points for evaluating integrals which are used to simulate a number of computer graphic techniques, including:

(1) soft shadows generated for scenes illuminated by a light source having a finite extent, such as a disk, as opposed to a point light source;
(2) Simulation of depth of field;
(3) motion blur;
(4) jittering.

The computer graphics system uses the low-discrepancy sequence:

(1) in connection with soft shadows, to generate sample points over the extent of the light source illuminating the scene;
(2) in connection with simulation of depth of field, to generate sample points over the area of the lens between the scene and the image;
(3) in connection with motion blur, to generate sample points over a time interval over which motion blur is to be simulated for moving objects in the scene; and
(4) in connection with jittering, to generate jittered sample points over an image or a plurality of contiguous pixels.

Unlike the random numbers used in connection with the Monte Carlo technique, the low discrepancy sequences ensure that the sample points are evenly distributed over a respective region or time interval, thereby reducing error in the image which can result from clumping of such sample points which can occur in the Monte Carlo technique.

In particular, the invention facilitates the generation of images of improved quality when using the same number of sample points at the same computational cost as in the Monte Carlo technique.

**Claims**

1. A computer graphics system (10) for generating a pixel value for a pixel in an image, the pixel being representative of a point in a scene, the computer graphics system comprising:

A. a sample point generator arranged to generate a set of sample points, the sample point generator using a predetermined strictly-deterministic low-discrepancy sequence to generate the sample points for a quasi-Monte Carlo evaluation;
B. a function evaluator arranged to generate a plurality of function values each representing an evaluation of a selected function at one of the sample points generated by said sample point generator;
C. a luminance value generator arranged to generate a luminance level value for the pixel as the average of said function values generated by said function evaluator; and
D. a pixel value generator arranged to use the luminance level value generated for the pixel in generating the pixel value; the system being **characterized in that**:
E. the predetermined low-discrepancy sequence is used to generate the sample points for at least a predetermined number of contiguous pixels.

2. The computer graphics system (10) of claim 1, the computer graphics system generating the pixel value to provide a soft shadow that is represented by an evaluation of an integral of a selected function over a finite extent of a light source, the sample point generator being arranged to generate a set of sample points representing points on the finite extent of the light source.

3. The computer graphics system of claim 2, in which said predetermined low-discrepancy sequence is a generalized Halton sequence.

4. The computer graphics system of claim 2 or claim 3, in which the selected function is

$$\frac{V(\vec{x}, \vec{x'})}{|\vec{x} - \vec{x'}|^2} L_e(\vec{x'})$$, where $(\vec{x})$ is the point in the scene $(\vec{x'})$ is a point on the area light source, $L_e(\vec{x})$

denotes a level of light emission of the area light source, and $v(\vec{x},\vec{x'})$ is a visibility function that equals one if the point $(\vec{x'})$ on the light source is visible from then point $(\vec{x})$ in the scene and zero if the if the point $(\vec{x'})$ on the light source is not visible from the point $(\vec{x})$ in the scene.

5. The computer graphics system (10) of claim 1, the computer graphics system being arranged to generate the pixel value to provide a depth of field that is represented by an evaluation of an integral of a selected function over an area of a lens.

6. The computer graphics system as defined in claim 5 in which said predetermined low-discrepancy sequence is a generalized Halton sequence.

7. The computer graphics system of claim 5 or claim 6, in which the selected function is $\overline{L}(x,y,x',y')$ , denoting the luminance coming from the point $(x',y')$ on the lens towards point $(x,y)$ in the image plane.

8. The computer graphics system (10) of claim 1, the computer graphics system being arranged to generate the pixel value to provide a motion blur that is represented by an evaluation of an integral of a selected function over a selected time interval, the sample point generator being arranged to generate a set of sample points representing points on the time interval

9. The computer graphics system of claim 8, in which said predetermined low-discrepancy sequence is a generalized Halton sequence.

10. The computer graphics system of claim 8 or claim 9, in which the selected function is $L(x,y,t)$ representing the luminance of point $(x,y)$ in the image at time "t."

11. The computer graphics system (10) of claim 1, the computer graphics system being arranged to generate the pixel value to provide a jittering that is represented by an evaluation of an integral of a selected function over an area in the image for the pixel, the sample point generator being arranged to generate a set of sample points representing points in a plurality of contiguous pixels in the image, the plurality of contiguous pixels including the pixel for which the pixel value is to be generated.

12. The computer graphics system of claim 11, in which said predetermined low-discrepancy sequence is a generalized Halton sequence.

13. The computer graphics system of claim 11 or claim 12, in which the selected function is $L(x,y)$, representing the colour at point $(x,y)$ in the image.

14. A computer graphics method for generating a pixel value for a pixel in an image, the pixel being representative of a point in a scene, the computer graphics method comprising the steps of:

   A. generating a set of sample using a predetermined strictly-deterministic low-discrepancy sequence for a quasi-Monte Carlo evaluation;
   B. generating a plurality of function values each representing an evaluation of a selected function at one of the sample points;
   C. generating a luminance level value for the pixel as the average of said function values; and

D. using the luminance level value generated for the pixel in generating the pixel value; the method being **characterized in that**:

E. the predetermined low-discrepancy sequence is used to generate the sample points for at least a predetermined number of contiguous pixels.

15. The computer graphics method of claim 14, the computer graphics method generating the pixel value to provide a soft shadow that is represented by an evaluation of an integral of a selected function over a finite extent of a light source, the computer graphics method comprising the step of:

generating a set of sample points representing points on the finite extent of the light source.

16. The computer graphics method of claim 15, in which said predetermined low-discrepancy sequence is a generalized Halton sequence.

17. The computer graphics method as of claim 15 or claim 16, in which the selected function is

$$\frac{V(\vec{x},\vec{x}')}{|\vec{x}-\vec{x}'|^2} L_e(\vec{x}')$$

, where $(\vec{x})$ is the point in the scene, $(\vec{x}')$ is a point on the area light source, $L_e(\vec{x})$ denotes a level of light emission of the area light source, and $V(\vec{x}, \vec{x}')$ is a visibility function that equals one if the point $(\vec{x}')$ on the light source is visible from the point $(\vec{x})$ in the scene and zero if the if the point $(\vec{x}')$ on the light source is not visible from the point $(\vec{x})$ in the scene.

18. The computer graphics method of claim 14, the computer graphics method generating the pixel value to provide a depth of field that is represented by an evaluation of an integral of a selected function over an area of a lens, the computer graphics method comprising the step of generating a set of sample points representing points on the area of the lens.

19. The computer graphics method of claim 18, in which said predetermined low-discrepancy sequence is a generalized Halton sequence.

20. The computer graphics method of claim 18 or claim 19, in which the selected function is $\overline{L}(x,y,x',y')$, denoting the luminance coming from the point $(x',y')$ on the lens towards point $(x,y)$ in the image plane.

21. The computer graphics method of claim 14, the pixel value generated so as to provide a motion blur that is represented by an evaluation of an integral of a selected function over a selected time interval, the computer graphics method comprising the step of generating a set of sample points representing points on the time interval.

22. The computer graphics method of claim 21, in which said predetermined low-discrepancy sequence is a generalized Halton sequence.

23. The computer graphics method as defined in claim 21 or claim 22 in which the selected function is L(x,y,t) representing the luminance of point $(x,y)$ in the image at time "t."

24. The computer graphics method of claim 14, the pixel value generated so as to provide a jittering that is represented by an evaluation of an integral of a selected function over an area in the image for the pixel, the computer graphics method comprising the step of generating a set of sample points representing points in a plurality of contiguous pixels in the image, the plurality of contiguous pixels including the pixel for which the pixel value is to be generated.

25. The computer graphics method of claim 24, in which said predetermined low-discrepancy sequence is a generalized Halton sequence.

26. A computer graphics method of claim 24 or claim 25 in which the selected function is L(x,y), representing the colour at point $(x,y)$ in the image.

**Patentansprüche**

1. Computergrafiksystem (10) zur Erzeugung eines Pixelwertes für einen Pixel in einem Bild, wobei das Pixel einen Punkt in einer Szene wiedergibt, wobei das Computergrafiksystem umfasst:

   A. einen Stichprobenpunktgenerator, der arrangiert ist, um einen Satz von Probenpunkten zu erzeugen, wobei der Probenpunktgenerator eine vorgegebene, streng deterministische Sequenz mit geringer Abweichung verwendet, um die Probenpunkte für eine quasi Monte Carlo-Auswertung zu erzeugen,
   B. einen Funktionsauswerter, der arrangiert ist, um eine Vielzahl von Funktionswerten zu erzeugen, die jeweils eine Auswertung einer ausgewählten Funktion bei mindestens einem der Probenpunkte wiedergeben, die durch den Probenpunktgenerator erzeugt werden,
   C. einen Luminanzwertgenerator, der arrangiert ist, um einen Luminanzwert für das Pixel als Durchschnitt der Funktionswerte zu erzeugen, die durch den Funktionsauswerter erzeugt werden und
   D. einen Pixelwertgenerator, der arrangiert ist, um den Luminanzwert zu verwenden, der für das Pixel bei der Erzeugung des Pixelwertes erzeugt wird, wobei das System **dadurch gekennzeichnet ist, dass**
   E. die vorgegebene Sequenz mit geringer Abweichung verwendet wird, um die Probenpunkte für mindestens eine vorgegebene Anzahl benachbarter Pixel zu erzeugen.

2. Computergrafiksystem (10) nach Anspruch 1, **dadurch gekennzeichnet, dass** das Computergrafiksystem den Pixelwert erzeugt, um einen weichen Schatten bereitzustellen, der durch eine Auswertung eines Integrals einer ausgewählten Funktion über eine endliche Ausdehnung von einer Lichtquelle wiedergegeben wird, wobei der Probenpunktgenerator arrangiert ist, um einen Satz von Probenpunkten zu erzeugen, die Punkte auf der endlichen Ausdehnung von der Lichtquelle wiedergeben.

3. Computergrafiksystem nach Anspruch 2, **dadurch gekennzeichnet, dass** die vorgegebene Sequence mit geringer Abweichung eine verallgemeinerte Halton-Sequenz ist.

4. Computergrafiksystem nach Anspruch 2 oder 3, **dadurch gekennzeichnet, dass** die ausgewählte Funktion

   $$\frac{V(\vec{x},\vec{x}')}{\left|\vec{x}-\vec{x}'\right|^2} L_e(\vec{x}')$$ ist, wobei $(\vec{x})$ der Punkt in der Szene ist, $(\vec{x}')$ ein Punkt auf der Lichtbereichsquelle ist, $L_e(\vec{x})$ die

   Stärke der Lichtemission von der Lichtquelle wiedergibt und $V(\vec{x},\vec{x}')$ eine Sichtbarkeitsfunktion ist, die eins ist, falls der Punkt $(\vec{x}')$ auf der Lichtquelle von dem Punkt $(\vec{x})$ in der Szene sichtbar ist, und null ist, falls der Punkt $(\vec{x}')$ auf der Lichtquelle von dem Punkt $(\vec{x})$ in der Szene nicht sichtbar ist.

5. Computergrafiksystem (10) nach Anspruch 1, **dadurch gekennzeichnet, dass** das Computergrafiksystem arrangiert ist, um den Pixelwert zu erzeugen, um eine Abbildungstiefe bereitzustellen, die durch Auswertung eines Intergrals einer ausgewählten Funktion über einen Bereich einer Linse wiedergegeben wird.

6. Computergrafiksystem nach Anspruch 5, **dadurch gekennzeichnet, dass** die vorgegebene Sequenze mit geringer Abweichung eine verallgemeinerte Halton-Sequenz ist.

7. Computergrafiksystem nach Anspruch 5 oder 6, **dadurch gekennzeichnet, dass** die ausgewählte Funktion $\vec{L}$(x, y, x', y') ist, die die Luminanz anzeigt, die von dem Punkt (x',y') auf der Linse in Richtung des Punkts (x,y) in der Bildebene stammt.

8. Computergrafiksystem (10) nach Anspruch 1, **dadurch gekennzeichnet, dass** das Computergrafiksystem arrangiert ist, um den Pixelwert zu erzeugen, um eine Bewegungsunschärfe bereitzustellen, die durch eine Auswertung eines Intergrals einer ausgewählten Funktion über ein ausgewähltes Zeitintervall wiedergegeben wird, wobei der Probenpunktgenerator arrangiert ist, um einen Satz von Probenpunkten zu erzeugen, die Punkte in dem Zeitinterall wiedergeben.

9. Computergrafiksystem nach Anspruch 8, **dadurch gekennzeichnet, dass** die vorgegebene Sequenz mit geringer Abweichung eine verallgemeinerte Halton-Sequenz ist.

10. Computergrafiksystem nach Anspruch 8 oder 9, **dadurch gekennzeichnet, dass** die ausgewählte Funktion L(x, y,t) ist, die die Luminanz des Punktes (x,y) in dem Bild zur Zeit "t" wiedergibt.

**11.** Computergrafiksystem (10) nach Anspruch 1, **dadurch gekennzeichnet, dass** das Computergrafiksystem arrangiert ist, um den Pixelwert zu erzeugen, um eine Bildschwankung bereitzustellen, die durch eine Auswertung eines Integrals einer ausgewählten Funktion über eine Fläche in dem Bild für das Pixel wiedergegeben wird, wobei der Probenpunktgenerator arrangiert ist, um einen Satz Probenpunkte zu erzeugen, die Punkte in einer Vielzahl von benachbarten Pixeln in dem Bild wiedergeben, wobei die Vielzahl von benachbarten Pixeln das Pixel einschließen, für welches der Pixelwert erzeugt werden soll.

**12.** Computergrafiksystem nach Anspruch 11, bei welchem die vorgegebene Sequenz mit niedriger Abweichung eine verallgemeinerte Halton-Sequenz ist.

**13.** Computergrafiksystem nach Anspruch 11 oder 12, **dadurch gekennzeichnet, dass** die ausgewählte Funktion L (x,y) ist, die die Farbe am Punkt (x,y) in dem Bild wiedergibt.

**14.** Computergrafikverfahren zur Erzeugung eines Pixelwertes für einen Pixel in einem Bild, wobei das Pixel einen Punkt in einer Szene wiedergibt, wobei das Computergrafikverfahren die Schritte umfasst:

A. einen Satz von Probenpunkten unter Verwendung einer vorgegebenen, streng deterministischen Sequenz mit geringer Abweichung für eine quasi Monte Carlo Auswertung zu erzeugen,
B. eine Vielzahl von Funktionswerten zu erzeugen, die jeweils eine Auswertung einer ausgewählten Funktion bei mindestens einem der Probenpunkte wiedergeben,
C. einen Luminanzwert für das Pixel als Durchschnitt der Funktionswerte zu erzeugen und
D. den Luminanzwert zu verwenden, der für das Pixel bei der Erzeugung des Pixelwertes erzeugt wird, wobei das Verfahren **dadurch gekennzeichnet ist, dass**
E. die vorgegebene Sequenz mit geringer Abweichung verwendet wird, um die Probenpunkte für mindestens eine vorgegebene Anzahl benachbarter Pixel zu erzeugen.

**15.** Computergrafikverfahren nach Anspruch 14, **dadurch gekennzeichnet, dass** das Computergrafikverfahren den Pixelwert erzeugt, um einen weichen Schatten bereitzustellen, der durch eine Auswertung eines Integrals einer ausgewählten Funktion über eine endliche Ausdehnung von einer Lichtquelle wiedergegeben wird, wobei das Computergrafikverfahren die Schritte umfasst, dass man einen Satz von Probenpunkten erzeugt, die Punkte auf der endlichen Ausdehnung von der Lichtquelle wiedergeben.

**16.** Computergrafikverfahren nach Anspruch 15, **dadurch gekennzeichnet, dass** die vorgegebene Sequence mit geringer Abweichung eine verallgemeinerte Halton-Sequenz ist.

**17.** Computergrafikverfahren nach Anspruch 15 oder 16, **dadurch gekennzeichnet, dass** die ausgewählte Funktion

$$\frac{V(\vec{x},\vec{x}')}{\left|\vec{x}-\vec{x}'\right|^2} L_e(\vec{x}')$$ ist, wobei $(\vec{x})$ der Punkt in der Szene ist, $(\vec{x}')$ ein Punkt auf der Lichtbereichsquelle ist, $L_e(\vec{x})$ die

Stärke der Lichtemission von der Lichtquelle wiedergibt und $V(\vec{x},\vec{x}')$ eine Sichtbarkeitsfunktion ist, die eins ist, falls der Punkt $(\vec{x}')$ auf der Lichtquelle von dem Punkt $(\vec{x})$ in der Szene sichtbar ist, und null ist, falls der Punkt $(\vec{x}')$ auf der Lichtquelle von dem Punkt $(\vec{x})$ in der Szene nicht sichtbar ist.

**18.** Computergrafikverfahren nach Anspruch 14, **dadurch gekennzeichnet, dass** das Computergrafikverfahren den Pixelwert erzeugt, um eine Abbildungstiefe bereitzustellen, die durch Auswertung eines Intergrals einer ausgewählten Funktion über einen Bereich einer Linse wiedergegeben wird, wobei das Computergrafikverfahren die Schritte umfasst, dass man einen Satz von Probenpunkten erzeugt, die Punkte auf dem Bereich der Linse wiedergeben.

**19.** Computergrafikverfahren nach Anspruch 18, **dadurch gekennzeichnet, dass** die vorgegebene Sequenze mit geringer Abweichung eine verallgemeinerte Halton-Sequenz ist.

**20.** Computergrafikverfahren nach Anspruch 18 oder 19, **dadurch gekennzeichnet, dass** die ausgewählte Funktion $\vec{L}$(x,y,x',y') ist, die die Luminanz anzeigt, die von dem Punkt (x',y') auf der Linse in Richtung des Punkts (x,y) in der Bildebene stammt.

**21.** Computergrafikverfahren nach Anspruch 14, **dadurch gekennzeichnet, dass** der Pixelwert derart erzeugt wird, dass er eine Bewegungsunschärfe bereitstellt, die durch eine Auswertung eines Intergrals einer ausgewählten Funktion über ein ausgewähltes Zeitintervall wiedergegeben wird, wobei das Computergrafikverfahren den Schritt umfasst, dass man einen Satz von Probenpunkten erzeugt, die Punkte in dem Zeitinterall wiedergeben.

**22.** Computergrafikverfahren nach Anspruch 21, **dadurch gekennzeichnet, dass** die vorgegebene Sequenz mit geringer Abweichung eine verallgemeinerte Halton-Sequenz ist.

**23.** Computergrafikverfahren nach Anspruch 21 oder 22, **dadurch gekennzeichnet, dass** die ausgewählte Funktion L(x,y,t) ist, die die Luminanz des Punktes (x,y) in dem Bild zur Zeit "t" wiedergibt.

**24.** Computergrafikverfahren nach Anspruch 14, **dadurch gekennzeichnet, dass** der Pixelwert derart erzeugt wird, dass eine Bildschwankung bereitgestellt wird, die durch eine Auswertung eines Integrals einer ausgewählten Funktion über eine Fläche in dem Bild für das Pixel wiedergegeben wird, wobei das Computergrafikverfahren den Schritt umfasst, dass man einen Satz Probenpunkte erzeugt, die Punkte in einer Vielzahl von benachbarten Pixeln in dem Bild wiedergeben, wobei die Vielzahl von benachbarten Pixeln das Pixel einschließen, für welches der Pixelwert erzeugt werden soll.

**25.** Computergrafikverfahren nach Anspruch 24, bei welchem die vorgegebene Sequenz mit niedriger Abweichung eine verallgemeinerte Halton-Sequenz ist.

**26.** Computergrafikverfahren nach Anspruch 24 oder 25, **dadurch gekennzeichnet, dass** die ausgewählte Funktion L(x,y) ist, die die Farbe am Punkt (x,y) in dem Bild wiedergibt.


**Revendications**

**1.** Système d'infographie (10) pour générer une valeur de pixel pour un pixel dans une image, le pixel étant représentatif d'un point dans une scène, le système d'infographie comprenant :

A. un générateur de point échantillon agencé pour générer un ensemble de points échantillons, le générateur de point échantillon utilisant une séquence à faible divergence strictement déterministe prédéterminée afin de générer les points échantillons pour une évaluation quasi-Monte Carlo ;
B. un évaluateur de fonction agencé pour générer une pluralité de valeurs de fonction représentant chacune une évaluation d'une fonction sélectionnée au niveau d'un des points échantillons générés par ledit générateur de point échantillon ;
C. un générateur de valeur de luminance agencé pour générer une valeur de niveau de luminance pour le pixel comme la moyenne desdites valeurs de fonction générées par ledit évaluateur de fonction ; et
D. un générateur de valeur de pixel agencé pour utiliser la valeur de niveau de luminance générée pour le pixel en générant la valeur de pixel ; le système étant **caractérisé en ce que** :
E. la séquence à faible divergence prédéterminée est utilisée pour générer les points échantillons pour au moins un nombre prédéterminé de pixels contigus.

**2.** Système d'infographie (10) selon la revendication 1, le système d'infographie générant la valeur de pixel pour fournir une ombre douce qui est représentée par une évaluation d'une intégrale d'une fonction sélectionnée sur une étendue finie d'une source lumineuse, le générateur de point échantillon étant agencé pour générer un ensemble de points échantillons représentant des points sur l'étendue finie de la source lumineuse.

**3.** Système d'infographie selon la revendication 2, dans lequel ladite séquence à faible divergence prédéterminée est une séquence de Halton généralisée.

**4.** Système d'infographie selon la revendication 2 ou la revendication 3, dans lequel la fonction sélectionnée est

$$\frac{V(\vec{x},\vec{x}')}{\left|\vec{x}-\vec{x}'\right|^2} L_e(\vec{x}')$$ , où $(\vec{x})$ est le point dans la scène, $(\vec{x}')$ est un point sur la surface de la source lumineuse, $L_e(\vec{x})$

indique un niveau d'émission de lumière de la source lumineuse surface, et $V(\vec{x},\vec{x}')$ est une fonction de visibilité qui est égale à un si le point $(\vec{x}')$ sur la source lumineuse est visible depuis le point $(\vec{x})$ dans la scène et à zéro si le point $(\vec{x}')$ sur la source lumineuse n'est pas visible depuis le point $(\vec{x})$ dans la scène.

**5.** Système d'infographie (10) selon la revendication 1, le système d'infographie étant agencé pour générer la valeur de pixel afin de fournir une profondeur de champ qui est représentée par une évaluation d'une intégrale d'une fonction sélectionnée sur une surface d'une lentille.

**6.** Système d'infographie selon la revendication 5, dans lequel ladite séquence à faible divergence prédéterminée est une séquence de Halton généralisée.

**7.** Système d'infographie selon la revendication 5 ou la revendication 6, dans lequel la fonction sélectionnée est $\overline{L}$(x, y,x',y'), indiquant la luminance provenant du point (x',y') sur la lentille vers le point (x,y) dans le plan image.

**8.** Système d'infographie (10) selon la revendication 1, le système d'infographie étant agencé pour générer la valeur de pixel afin de fournir un flou de mouvement qui est représenté par une évaluation d'une intégrale d'une fonction sélectionnée sur un intervalle de temps sélectionné, le générateur de point échantillon étant agencé pour générer un ensemble de points échantillons représentant des points sur l'intervalle de temps.

**9.** Système d'infographie selon la revendication 8, dans lequel ladite séquence à faible divergence prédéterminée est une séquence de Halton généralisée.

**10.** Système d'infographie selon la revendication 8 ou la revendication 9, dans lequel la fonction sélectionnée est L(x, y,t) représentant la luminance du point (x,y) dans l'image au temps « t ».

**11.** Système d'infographie (10) selon la revendication 1, le système d'infographie étant agencé pour générer la valeur de pixel afin de fournir un scintillement qui est représenté par une évaluation d'une intégrale d'une fonction sélectionnée sur une surface dans l'image pour le pixel, le générateur de point échantillon étant agencé pour générer un ensemble de points échantillons représentant des points dans une pluralité de pixels contigus dans l'image, la pluralité de pixels contigus incluant le pixel pour lequel la valeur de pixel doit être générée.

**12.** Système d'infographie selon la revendication 11, dans lequel ladite séquence à faible divergence prédéterminée est une séquence de Halton généralisée.

**13.** Système d'infographie selon la revendication 11 ou la revendication 12, dans lequel la fonction sélectionnée est L (x,y), représentant la couleur au point (x,y) dans l'image.

**14.** Procédé d'infographie pour générer une valeur de pixel pour un pixel dans une image, le pixel étant représentatif d'un point dans une scène, le procédé d'infographie comprenant les étapes consistant à :

A. générer un ensemble de points échantillons en utilisant une séquence à faible divergence strictement déterministe prédéterminée pour une évaluation quasi-Monte Carlo ;
B. générer une pluralité de valeurs de fonction représentant chacune une évaluation d'une fonction sélectionnée au niveau d'un des points échantillons ;
C. générer une valeur de niveau de luminance pour le pixel comme la moyenne desdites valeurs de fonction ; et
D. utiliser la valeur de niveau de luminance générée pour le pixel en générant la valeur de pixel ; le procédé étant **caractérisé en ce que** :
E. la séquence à faible divergence prédéterminée est utilisée pour générer les points échantillons pour au moins un nombre prédéterminé de pixels contigus.

**15.** Procédé d'infographie selon la revendication 14, le procédé d'infographie générant la valeur de pixel pour fournir une ombre douce qui est représentée par une évaluation d'une intégrale d'une fonction sélectionnée sur une étendue finie d'une source lumineuse, le procédé d'infographie comprenant l'étape consistant à :

générer un ensemble de points échantillons représentant des points sur l'étendue finie de la source lumineuse.

**16.** Procédé d'infographie selon la revendication 15, dans lequel ladite séquence à faible divergence prédéterminée est une séquence de Halton généralisée.

**17.** Procédé d'infographie selon la revendication 15 ou la revendication 16, dans lequel la fonction sélectionnée est

$$\frac{V(\vec{x},\vec{x}')}{\left|\vec{x}-\vec{x}'\right|^2} L_e(\vec{x}')$$ , où $(\vec{x})$ est le point dans la scène, $(\vec{x}')$ est un point sur la surface de la source lumineuse, $L_e(\vec{x})$ indique un niveau d'émission de lumière de la source lumineuse surface, et $V(\vec{x},\vec{x}')$ est une fonction de visibilité qui est égale à un si le point $(\vec{x}')$ sur la source lumineuse est visible depuis le point $(\vec{x})$ dans la scène et à zéro si le point $(\vec{x}')$ sur la source lumineuse n'est pas visible depuis le point $(\vec{x})$ dans la scène.

18. Procédé d'infographie selon la revendication 14, le procédé d'infographie générant la valeur de pixel afin de fournir une profondeur de champ qui est représentée par une évaluation d'une intégrale d'une fonction sélectionnée sur une surface d'une lentille, le procédé d'infographie comprenant l'étape consistant à générer un ensemble de points échantillons représentant des points sur la surface de la lentille.

19. Procédé d'infographie selon la revendication 18, dans lequel ladite séquence à faible divergence prédéterminée est une séquence de Halton généralisée.

20. Procédé d'infographie selon la revendication 18 ou la revendication 19, dans lequel la fonction sélectionnée est $\overline{L}$ (x,y,x',y'), indiquant la luminance provenant du point (x',y') sur la lentille vers le point (x,y) dans le plan image.

21. Procédé d'infographie selon la revendication 14, la valeur de pixel étant générée afin de fournir un flou de mouvement qui est représenté par une évaluation d'une intégrale d'une fonction sélectionnée sur un intervalle de temps sélectionné, le procédé d'infographie comprenant l'étape consistant à générer un ensemble de points échantillons représentant des points sur l'intervalle de temps.

22. Procédé d'infographie selon la revendication 21, dans lequel ladite séquence à faible divergence prédéterminée est une séquence de Halton généralisée.

23. Procédé d'infographie selon la revendication 21 ou la revendication 22, dans lequel la fonction sélectionnée est L (x,y,t) représentant la luminance du point (x,y) dans l'image au temps « t ».

24. Procédé d'infographie selon la revendication 14, la valeur de pixel étant générée afin de fournir un scintillement qui est représenté par une évaluation d'une intégrale d'une fonction sélectionnée sur une surface dans l'image pour le pixel, le procédé d'infographie comprenant l'étape consistant à générer un ensemble de points échantillons représentant des points dans une pluralité de pixels contigus dans l'image, la pluralité de pixels contigus incluant le pixel pour lequel la valeur de pixel doit être générée.

25. Procédé d'infographie selon la revendication 24, dans lequel ladite séquence à faible divergence prédéterminée est une séquence de Halton généralisée.

26. Procédé d'infographie selon la revendication 24 ou la revendication 25, dans lequel la fonction sélectionnée est L (x,y), représentant la couleur au point (x,y) dans l'image.

*FIG.1*

# *FIG. 2*

100. COMPUTER GRAPHICS SYSTEM 10 IDENTIFIES POINT IN SCENE FOR WHICH PIXEL VALUE IS TO BE GENERATED.

101. COMPUTER GRAPHICS SYSTEM 10 GENERATES "N" ELEMENTS OF A TWO-DIMENSIONAL HALTON SEQUENCE REPRESENTING POINTS ON THE LIGHT SOURCE WHICH ARE TO BE USED IN APPROXIMATION OF THE PIXEL VALUE TO PROVIDE FOR APPEARANCE OF SOFT SHADOWS IN IMAGE INCLUDING PIXEL WHOSE PIXEL VALUE IS BEING GENERATED.

102. FOR EACH OF THE "N" ELEMENTS OF THE TWO-DIMENSIONAL HALTON SEQUENCE GENERATED IN STEP 101, COMPUTER GRAPHICS SYSTEM 10 GENERATES A VALUE FOR THE SOFT SHADOWS ILLUMINATION FUNCTION (EQUATION (7)), USING THE ELEMENT OF THE HALTON SEQUENCE AS THE COORDINATES OF THE POINT ON THE LIGHT SOURCE.

103. COMPUTER GRAPHICS SYSTEM 10 GENERATES PIXEL VALUE FOR POINT IN SCENE AS AVERAGE OF THE VALUES GENERATED IN STEP 102.

# *FIG. 3*

110. COMPUTER GRAPHICS SYSTEM 10 IDENTIFIES POINT IN SCENE FOR WHICH PIXEL VALUE IS TO BE GENERATED.

111. COMPUTER GRAPHICS SYSTEM 10 GENERATES "N" ELEMENTS OF A TWO-DIMENSIONAL HALTON SEQUENCE REPRESENTING POINTS (X',Y') ON LENS WHICH ARE TO BE USED IN APPROXIMATION OF THE PIXEL VALUE TO PROVIDE SIMULATION OF DEPTH OF FIELD FOR THE LENS IN IMAGE INCLUDING PIXEL WHOSE PIXEL VALUE IS BEING GENERATED.

112. FOR EACH OF THE "N" ELEMENTS OF THE TWO-DIMENSIONAL HALTON SEQUENCE GENERATED IN STEP 111, COMPUTER GRAPHICS SYSTEM 10 GENERATES A VALUE FOR THE LUMINANCE FUNCTION L-(BAR) (X,Y,X',Y'), USING THE ELEMENT OF THE HALTON SEQUENCE AS THE COORDINATES OF THE POINT ON THE LENS (X',Y').

113. COMPUTER GRAPHICS SYSTEM 10 GENERATES A PIXEL VALUE FOR POINT IN SCENE AS THE AVERAGE OF THE VALUES GENERATED IN STEP 112.

# *F I G. 4*

120. COMPUTER GRAPHICS SYSTEM 10 IDENTIFIES POINT IN SCENE FOR WHICH PIXEL VALUE IS TO BE GENERATED.

121. COMPUTER GRAPHICS SYSTEM 10 GENERATES "N" ELEMENTS OF A ONE-DIMENSIONAL HALTON SEQUENCE REPRESENTING POINTS IN TIME "T" WHICH ARE TO BE USED IN APPROXIMATION OF THE PIXEL VALUE TO PROVIDE SIMULATION OF MOTION BLUR IN IMAGE INCLUDING PIXEL WHOSE PIXEL VALUE IS BEING GENERATED.

122. FOR EACH OF THE "N" ELEMENTS OF THE ONE-DIMENSIONAL HALTON SEQUENCE GENERATED IN STEP 121, COMPUTER GRAPHICS SYSTEM 10 GENERATES A VALUE FOR THE LUMINANCE FUNCTION L(X,Y,T), USING THE ELEMENT OF THE HALTON SEQUENCE AS THE POINT IN TIME "T" OVER WHICH MOTION BLUR IS TO BE GENERATED.

123. COMPUTER GRAPHICS SYSTEM 10 GENERATES A PIXEL VALUE FOR POINT IN SCENE AS THE AVERAGE OF THE VALUES GENERATED IN STEP 122.

# *FIG. 5*

130. COMPUTER GRAPHICS SYSTEM 10 IDENTIFIES IMAGE REGION FOR WHICH PIXEL VALUES ARE TO BE GENERATED

131. COMPUTER GRAPHICS SYSTEM 10 GENERATES "N" ELEMENTS OF A TWO-DIMENSIONAL HALTON SEQUENCE REPRESENTING POINTS "(X,Y)" ON IMAGE REGION FOR WHICH PIXEL VALUES ARE TO BE GENERATED, WHICH POINTS ARE TO BE USED IN APPROXIMATION OF PIXEL VALUES TO PROVIDE SIMULATION OF JITTERING FOR THE PIXELS IN THE IMAGE REGION IDENTIFIED IN STEP 130.

132. FOR EACH OF THE PIXELS CONTAINED IN THE IMAGE REGION, IDENTIFY THE POINTS "(X,Y)" IDENTIFIED BY THE TWO-DIMENSIONAL HALTON SEQUENCE GENERATED IN STEP 131 THAT ARE CONTAINED WITHIN THE AREA OF THE PIXEL.

A

F I G. 5A

133. FOR EACH OF THE POINTS IDENTIFIED IN STEP 132, COMPUTER GRAPHICS SYSTEM 10 GENERATES A VALUE FOR THE COLOR FUNCTION L(X,Y) USING THE ELEMENT OF THE HALTON SEQUENCE AS THE POINT (X,Y) OVER WHICH JITTERING IS TO BE GENERATED.

134. FOR EACH PIXEL IDENTIFIED IN STEP 132, COMPUTER GRAPHICS SYSTEM 10 GENERATES PIXEL VALUE FOR THE PIXEL AS THE AVERAGE OF THE COLOR FUNCTION VALUES GENERATED IN STEP 133.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOROKOFF ; CARFLISCH.** Quasi-Monte Carlo Integration. *journal of computational physics,* December 1995, vol. 122 (2
- **VEACH E et al.** Optimally combining Sampling Techniques for Monte Carlo Rendering. *computer graphics proceedings, Los Angeles,* 06 August 1995
- **SHIRLEY P et al.** Monte Carlo Techniques for Direct Lighting Calculations. *ACM transactions on graphics,* 01 January 1996, vol. 15 (1
- **KELLER A.** *A Quasi-Monte-Carlo Algorithm for the Global Illumination Problem,* 1994, 1-11
- **J. H. HALTON.** *Numerische Mathematik,* 1960, vol. 2, 84-90
- **W. H. PRESS et al.** Numerical Recipes in Fortran. Cambridge University Press, 1992, 300